(19) Europäisches Patentamt
European Patent Office
Office européen des brevets

(11) **EP 2 323 299 A1**

(12) **EUROPEAN PATENT APPLICATION**
published in accordance with Art. 153(4) EPC

(43) Date of publication:
**18.05.2011 Bulletin 2011/20**

(51) Int Cl.:
*H04J 11/00* (2006.01)   *H04W 88/02* (2009.01)

(21) Application number: **09809964.1**

(22) Date of filing: **27.08.2009**

(86) International application number:
**PCT/JP2009/064924**

(87) International publication number:
**WO 2010/024314 (04.03.2010 Gazette 2010/09)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **27.08.2008   JP 2008218512**

(71) Applicant: **NTT DOCOMO, INC.**
**Chiyoda-ku**
**Tokyo 100-6150 (JP)**

(72) Inventors:
• **SUZUKI, Mototsugu**
  **Chiyoda-ku, Tokyo 100-6150 (JP)**
• **IMAI, Tetsurou**
  **Chiyoda-ku, Tokyo 100-6150 (JP)**
• **KITAO, Koushirou**
  **Chiyoda-ku, Tokyo 100-6150 (JP)**
• **ISHIKAWA, Yoshikiro**
  **Chiyoda-ku, Tokyo 100-6150 (JP)**

(74) Representative: **HOFFMANN EITLE**
**Patent- und Rechtsanwälte**
**Arabellastraße 4**
**81925 München (DE)**

(54) **MOBILE STATION AND MOBILE COMMUNICATION METHOD**

(57)     A mobile station UE includes: a measuring unit (12) which measures the reception power of a predetermined signal formed by symbols continuously transmitted in the frequency axis direction or the time axis direction; an estimating unit (14) which estimates the propagation loss of a predetermined signal in the downlink in accordance with the transmission power of a predetermined signal stored in advance and the reception power of the predetermined signal measured by the measuring unit (12); and a calculating unit which calculates the reception power of a pilot signal in accordance with the transmission power of the pilot signal stored in advance and the propagation loss of the predetermined signal estimated by the estimating unit (14).

FIG. 2

EP 2 323 299 A1

## Description

### TECHNICAL FIELD

The present invention relates to a mobile station and a mobile communication method.

### BACKGROUND ART

In a W-CDMA (Wideband-Code Division Multiple Access) mobile communication system, a receiving apparatus (for example, a mobile station) is configured to measure the reception power of pilot symbols contained in a CPICH (Common Pilot Channel) signal transmitted by a radio base station in order to calculate the radio quality in the downlink.
The W-CDMA mobile communication system is configured such that multiple pilot symbols are transmitted continuously in the time axis direction at the same frequency

### SUMMARY OF THE INVENTION

### PROBLEM TO BE SOLVED BY THE INVENTION

On the other hand, an LTE (Long Term Evolution) mobile communication system is configured such that multiple pilot symbols are transmitted discontinuously in the frequency axis direction and the time axis direction within a predetermined system band and at predetermined timings.
Therefore, in the LTE mobile communication system, fading effects on the respective pilot symbols highly possibly differ (that is, frequency correlation and time correlation between the pilot symbols are possibly low). For this reason, the LTE mobile communication system has a problem in that the mobile station is unable to accurately measure the average reception quality of multiple pilot symbols (for example, an average value of the reception powers, and the like) when employing the same calculation method as that employed in the W-CDMA mobile communication system.
In this respect, the present invention has been made in view of the above-mentioned problem. It is an objective of the present invention to provide a mobile station and a mobile communication method which are capable of accurately measuring the average reception quality (for example, an average value of the reception powers, and the like) of multiple pilot symbols transmitted discontinuously in the frequency axis direction and the time axis direction.

### MEANS FOR SOLVING THE PROBLEMS

A first feature of the present invention is summarized as a mobile station including: a measuring unit configured to measure a reception power of a predetermined signal constituted of a symbol transmitted continuously in a frequency axis direction or in a time axis direction; an estimating unit configured to estimate a propagation loss of the predetermined signal in a downlink on the basis of a transmission power of the predetermined signal and the reception power of the predetermined signal measured by the measuring unit, the transmission power of the predetermined signal being stored in advance; and a calculating unit configured to calculate a reception power of a pilot signal on the basis of a transmission power of the pilot signal and the propagation loss of the predetermined signal estimated by the estimating unit, the transmission power of the pilot signal being stored in advance.
In the first feature of the present invention, the measuring unit is configured to measure the reception power of the predetermined signal by performing an averaging process on reception powers of a plurality of the symbols transmitted continuously in the frequency axis direction or in the time axis direction.
A second feature of the present invention is summarized as a mobile communication method including the steps of: measuring, at a reception apparatus, a reception power of a predetermined signal constituted of a symbol transmitted continuously in a frequency axis direction or in a time axis direction; estimating, at the reception apparatus, a propagation loss of the predetermined signal in a downlink on the basis of a transmission power of the predetermined signal and the reception power of the predetermined signal thus measured, the transmission power of the predetermined signal being stored in advance; and calculating a reception power of a pilot signal on the basis of a transmission power of the pilot signal and the propagation loss of the predetermined signal thus estimated, the transmission power of the pilot signal being stored in advance.

### EFFECTS OF THE INVENTION

As described above, the present invention provides a mobile station and a mobile communication method which are capable of accurately measuring the average reception quality (for example, an average value of reception powers, and the like) of multiple pilot symbols discontinuously transmitted in the frequency axis direction and the time axis direction.

## BRIEF DESCRIPTION OF THE DRAWINGS

[Fig. 1] Fig. 1 is an overall configuration diagram of a mobile communication system according to a first embodiment of the present invention.

[Fig. 2] Fig. 2 is a diagram for explaining a signal transmitted with a predetermined bandwidth in a mobile communication system according to the first embodiment of the present invention.

[Fig. 3] Fig. 3 is a functional block diagram of a mobile station according to the first embodiment of the present invention.

[Fig. 4] Fig. 4 is a flowchart showing operation of a radio base station according to the first embodiment of the present invention.

## EMBODIMENTS FOR CARRYING OUT THE INVENTION

(Configuration of a mobile communication system according to a first embodiment of the present invention)

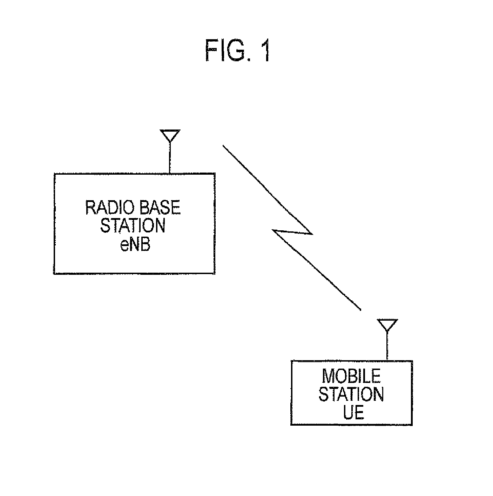

A configuration of a mobile communication system according to a first embodiment of the present invention is described with reference to FIG. 1 to FIG. 3.

As shown in FIG. 1, the mobile communication system according to the present embodiment is a LTE mobile communication system and includes a radio base station eNB and a mobile station UE.

The radio base station eNB is configured to transmit a P-BCH (Physical-Broadcast Channel) signal, a P-SCH (Primary-Synchronization Channel) signal, an S-SCH (Secondary-Synchronization Channel) signal, a reference signal (RS), and the like, as physical channel signals in the downlink.

The P-BCH signal is a broadcast signal transmitted once every 10 ms, to which a time diversity of transmitting the same information while changing a scramble code over four consecutive radio frame sections is employed in order to secure the coverage.

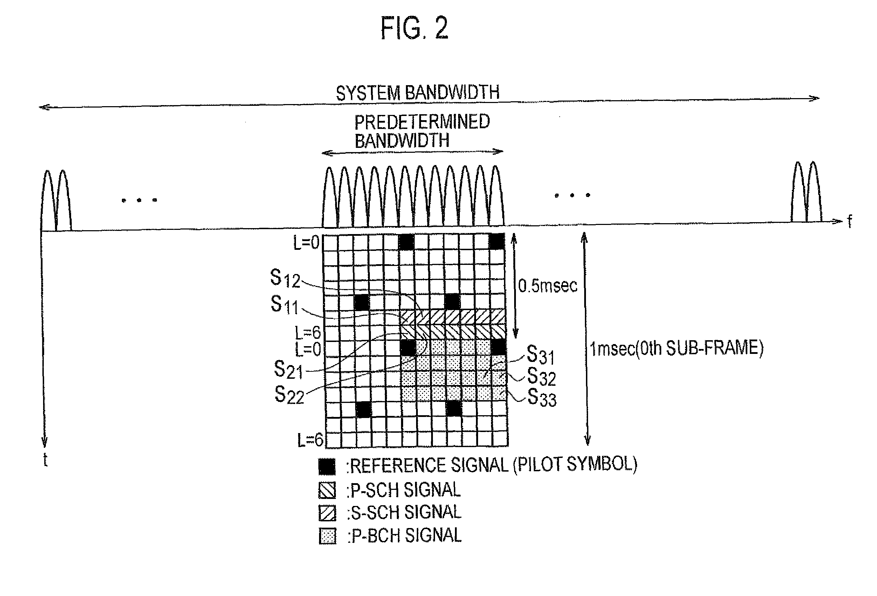

As shown in FIG. 2, the P-BCH signal is constituted of symbols continuously transmitted in the frequency axis direction and the time axis direction in a subframe #0 within a predetermined frequency band (a central frequency band in the mobile communication system).

Further, the P-SCH signal and the S-SCH signal are synchronization signals used in the cell searching process performed by the mobile station UE. As shown in FIG. 2, the P-SCH signal is constituted of symbols continuously transmitted in the frequency axis direction in the subframe #0 within a predetermined frequency band.

Further, the reference signal is a pilot signal used in the channel estimation process and the channel quality measurement process performed by the mobile station UE. As shown in FIG. 2, the reference signal is constituted of symbols discontinuously transmitted in the frequency axis direction or the time axis direction in the subframe #0 within a predetermined frequency band.

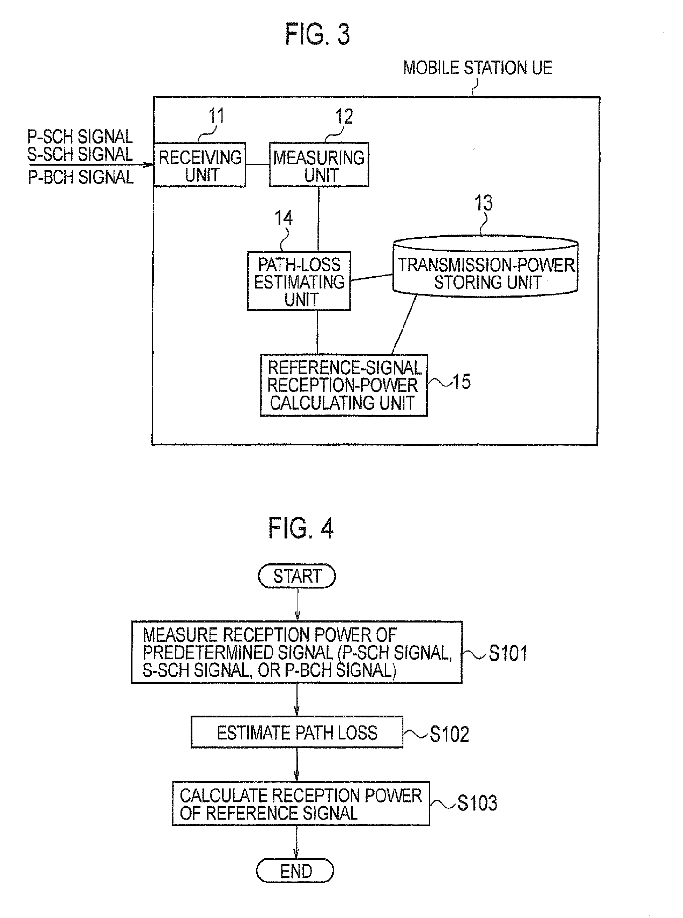

As shown in FIG. 3, the mobile station UE includes a receiving unit 11, a measuring unit 12, a transmission-power storing unit 13, a path-loss estimating unit 14, and a reference-signal reception-power calculating unit 15.

The receiving unit 11 is configured to receive the P-SCH signal, the S-SCH signal, the P-BCH signal, the reference signal, and the like transmitted by the radio base station eNB.

The measuring unit 12 is configured to measure the reception power of a predetermined signal constituted of symbols continuously transmitted in the frequency axis direction or the time axis direction. For example, the measuring unit 12 is configured to measure the reception power of the P-SCH signal, the S-SCH signal or the P-BCH signal, as the predetermined signal.

For example, since the P-SCH signal is constituted of symbols continuously transmitted in the frequency axis direction, the measuring unit 12 may be configured to measure the reception power of the P-SCH signal by performing an averaging process on the reception powers of multiple symbols constituting the P-SCH signal according to (Formula 1) shown below on the assumption that the correlation among the multiple symbols is high.

[Formula 1]

$$\lambda_1 = 1/2N_s \times \sum_{1}^{N_s-1} \left| r_n + r_{n+1} \right|^2$$

$$\lambda_2 = 1/2N_s \times \sum_{1}^{N_s-1} \left| r_n - r_{n+1} \right|^2$$

$$RSRP = 1/2 \times \left| \lambda_1 - \lambda_2 \right|^2 \quad \text{... (Formula 1)}$$

Here, "rn" and "rn + 1" in (Formula 1) represent reception signal vectors of two symbols which constitute the P-SCH signal and are adjacent to each other in the frequency axis direction (for example, "S21" and "S22" in FIG. 2).

Note that the measuring unit 12 may be configured to measure desired-wave reception power of the P-SCH signal by performing the above-described averaging process on power values of two or more symbols which constitute the P-SCH signal and are adjacent to each other in the frequency axis direction.

Moreover, since the S-SCH signal is constituted of symbols continuously transmitted in the frequency axis direction, the measuring unit 12 may be configured to measure the reception power of the S-SCH signal by performing the averaging process on desired wave powers and interference wave powers of multiple symbols constituting the S-SCH signal according to the above-described (Formula 1) on assumption that the correlation among the multiple symbols is high.

Here, "rn" and "rn + 1" in (Formula 1) represent reception signal vectors of two symbols which constitute the S-SCH signal and are adjacent to each other in the frequency axis direction constituting (for example, "S11" and "S12" in FIG. 2).

Further, the measuring unit 12 may be configured to measure desired-wave reception power of the S-SCH signal by performing the above-described averaging process on power values of two or more symbols which constitute the S-SCH signal and are adjacent to each other in the frequency axis direction.

Further, since the P-BCH signal is constituted of symbols continuously transmitted in the frequency axis direction and time axis direction, the measuring unit 12 may be configured to measure the reception power of the P-BCH signal by performing the averaging process on desired wave powers and interference wave powers of multiple symbols constituting the P-BCH signal according to the above-described (Formula 1) on assumption that the correlation among the multiple symbols is high.

Here, "rn" and "rn + 1" in (Formula 1) represent reception signal vectors of two symbols which constitute the P-BCH signal and are adjacent to each other in the frequency axis direction (for example, "S31" and "S32" in FIG. 2), or reception signal vectors of two symbols which constitute the P-BCH signal and are adjacent in the time axis direction (for example, "S32" and "S33" in FIG. 2).

Note that the measuring unit 12 may be configured to measure the reception power of the P-BCH signal by performing the above-described averaging process on reception signal vectors of two or more symbols which constitute the P-BCH signal and are adjacent to each other in the frequency axis direction, reception signal vectors of two or more symbols which constitute the P-BCH signal and are adjacent to each other in the time axis direction, or combination of reception signal vectors of one or more symbols which constitute the P-BCH signal and are adjacent to each other in the frequency axis direction and reception signal vectors of one or more symbols which constitute the P-BCH signal and are adjacent to each other in the time axis direction.

It should be noted that the reception power of the P-BCH signal is calculated using a reception signal multiplied by once demodulated signal in order to match the phase of all signals.

The transmission-power storing unit 13 is configured to store the transmission power of a predetermined signal (for example, P-SCH signal, S-SCH signal or P-BCH signal). In addition, the transmission-power storing unit 13 is configured to store the transmission power of the reference signal.

Note that the transmission-power storing unit 13 may be configured to store the transmission power of each of the symbols constituting the P-SCH signal, the S-SCH signal, the P-BCH signal, or the reference signal.

The path-loss estimating unit 14 is configured to estimate the propagation loss (path loss) of a predetermined signal (for example, P-SCH signal, S-SCH signal or P-BCH signal) in the downlink on the basis of the transmission power of the predetermined signal stored in the transmission-power storing unit 13 in advance and the reception power of the predetermined signal measured by the measuring unit 12.

Here, when the transmission power of the predetermined signal (for example, P-SCH signal, S-SCH signal or P-BCH signal) is represented by "X (dBm)", the measured reception power of the predetermined signal is represented by "Y (dBm)" and the transmission power of the reference signal is represented by "Z (dBm)", the path-loss estimating unit 14 is configured to estimate the propagation loss of the predetermined signal in the downlink according to "X (dBm) - Y (dBm)".

Alternatively, the path-loss estimating unit 14 may calculate the propagation loss of the predetermined signal in the downlink by using "mW" but not "dBm" of the true value.

Note that, more specifically, the path-loss estimating unit 14 is configured to estimate the propagation loss of each of the symbols constituting the predetermined signal in the downlink on the basis of the transmission power of each symbol constituting the predetermined signal stored in the transmission-power storing unit 13 in advance and the reception power of each symbol constituting the predetermined signal measured by the measuring unit 12.

The reference-signal reception-power calculating unit 15 is configured to calculate the reception power of the reference signal on the basis of the transmission power of the reference signal stored in the transmission-power storing unit 13 in advance and the propagation loss of the predetermined signal estimated by the path-loss estimating unit 14.

For example, the reference-signal reception-power calculating unit 15 is configured to calculate the reception power of the reference signal according to "Z (dBm) - path loss of predetermined signal (dBm) + k". Here, "k" is a coefficient for correction.

The reference-signal reception-power calculating unit 15 is configured to calculate the reception power of a reference signal corresponding to each symbol on the basis of the transmission power of the symbol constituting the reference signal stored in the transmission-power storing unit 13 in advance and the propagation loss of the symbol constituting the predetermined signal estimated by the path-loss estimating unit 14.

(operation of the Mobile Communication System according to the First Embodiment of the Present Invention)

The operation of the mobile communication system according to the first embodiment of the present invention, more specifically, the operation of the mobile station UE according to the present embodiment for measuring the reception power of a reference signal in the downlink is described with reference to FIG. 4.

In Step S101, the mobile station UE measures the reception power Y (dBm) of a predetermined signal (for example, a P-SCH signal, an S-SCH signal or a P-BCH signal) transmitted by the radio base station eNB.

Specifically, the mobile station UE may measure the reception power Y (dBm) of the predetermined signal transmitted by the radio base station eNB, by performing the averaging process on multiple symbols constituting such predetermined signal.

In Step S102, the mobile station UE estimates the propagation loss (path loss) of the predetermined signal in the downlink on the basis of the transmission power X (dBm) of the predetermined signal stored in advance and the reception power Y (dBm) of the predetermined signal thus measured, that is, according to "X (dBm) - Y (dBm)".

In Step S103, the mobile station UE calculates the reception power of the reference signal on the basis of the transmission power Z (dBm) of the reference signal stored in advance and the path loss of the predetermined signal thus estimated, that is, according to "Z (dBm) - Path Loss of Predetermined Signal (dBm) + k".

(Operations and Effects of the Mobile Communication System according to the First Embodiment of the Present Invention)

The mobile communication system according to the first embodiment of the present invention is configured to calculate the reception powers of symbols constituting a reference signal and being discontinuously transmitted in the frequency axis direction and the time axis direction on the basis of the reception power of a predetermined signal (for example, a POSH signal, an S-SCH signal or a P-BCH signal) continuously transmitted in the frequency axis direction or the time axis direction. This makes it possible to accurately measure the average reception quality of the reference signal.

Note that the above described operations of the radio base station eNB and the mobile station UE may be implemented by hardware, may be implemented by a software module executed by a processor, or may be implemented by a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium

**EP 2 323 299 A1**

and the processor may be provided in an ASIC. The ASIC may be provided in the radio base station eNB and the mobile station UE. Also, the storage medium and the processor may be provided in the radio base station eNB and the mobile station UE as a discrete component.

Hereinabove, the present invention has been described in detail by use of the foregoing embodiment. It is obvious, however, to those skilled in the art that the present invention should not be limited to the embodiment described in this description. The present invention is implementable as modified and improved embodiments without departing from the sprit and the scope of the present invention defined by the description of the scope of the appended claims. Therefore, the explanation of this description is intended only to explain an illustrative example of the present invention, and is not intended to impose any limitation on the present invention.

**Claims**

1.  A mobile station comprising:

    a measuring unit configured to measure a reception power of a predetermined signal constituted of a symbol transmitted continuously in a frequency axis direction or in a time axis direction;
    an estimating unit configured to estimate a propagation loss of the predetermined signal in a downlink on the basis of a transmission power of the predetermined signal and the reception power of the predetermined signal measured by the measuring unit, the transmission power of the predetermined signal being stored in advance; and
    a calculating unit configured to calculate a reception power of a pilot signal on the basis of a transmission power of the pilot signal and the propagation loss of the predetermined signal estimated by the estimating unit, the transmission power of the pilot signal being stored in advance.

2.  The mobile station according to claim 1, wherein
    the measuring unit is configured to measure the reception power of the predetermined signal by performing an averaging process on reception powers of a plurality of the symbols transmitted continuously in the frequency axis direction or in the time axis direction.

3.  A mobile communication method comprising the steps of:

    measuring, at a reception apparatus, a reception power of a predetermined signal constituted of a symbol transmitted continuously in a frequency axis direction or in a time axis direction;
    estimating, at the reception apparatus, a propagation loss of the predetermined signal in a downlink on the basis of a transmission power of the predetermined signal and the reception power of the predetermined signal thus measured, the transmission power of the predetermined signal being stored in advance; and
    calculating a reception power of a pilot signal on the basis of a transmission power of the pilot signal and the propagation loss of the predetermined signal thus estimated, the transmission power of the pilot signal being stored in advance.

6

FIG. 1

RADIO BASE
STATION
eNB

MOBILE
STATION
UE

FIG. 2

SYSTEM BANDWIDTH

PREDETERMINED BANDWIDTH

f

1msec(0th SUB-FRAME)

0.5msec

S31
S32
S33

S12
S11
L=0
L=6
L=0
S21
S22
L=6

■ :REFERENCE SIGNAL (PILOT SYMBOL)

:P-SCH SIGNAL

:S-SCH SIGNAL

:P-BCH SIGNAL

# FIG. 3

MOBILE STATION UE

P-SCH SIGNAL
S-SCH SIGNAL
P-BCH SIGNAL

11
RECEIVING UNIT

12
MEASURING UNIT

14
PATH-LOSS ESTIMATING UNIT

13
TRANSMISSION-POWER STORING UNIT

REFERENCE-SIGNAL RECEPTION-POWER CALCULATING UNIT ~15

# FIG. 4

START

MEASURE RECEPTION POWER OF PREDETERMINED SIGNAL (P-SCH SIGNAL, S-SCH SIGNAL, OR P-BCH SIGNAL) ~S101

ESTIMATE PATH LOSS ~S102

CALCULATE RECEPTION POWER OF REFERENCE SIGNAL ~S103

END

9

| | | | |
|---|---|---|---|
| **INTERNATIONAL SEARCH REPORT** | | International application No. | |
| | | PCT/JP2009/064924 | |

| A. CLASSIFICATION OF SUBJECT MATTER |
|---|
| H04J11/00(2006.01)i, H04W88/02(2009.01)i |
| According to International Patent Classification (IPC) or to both national classification and IPC |

| B. FIELDS SEARCHED |
|---|
| Minimum documentation searched (classification system followed by classification symbols) |
| H04J11/00, H04W88/02 |

| Documentation searched other than minimum documentation to the extent that such documents are included in the fields searched | | |
|---|---|---|
| Jitsuyo Shinan Koho | 1922–1996 | Jitsuyo Shinan Toroku Koho 1996–2009 |
| Kokai Jitsuyo Shinan Koho | 1971–2009 | Toroku Jitsuyo Shinan Koho 1994–2009 |

| Electronic data base consulted during the international search (name of data base and, where practicable, search terms used) |
|---|
| |

| C. DOCUMENTS CONSIDERED TO BE RELEVANT | | |
|---|---|---|
| Category* | Citation of document, with indication, where appropriate, of the relevant passages | Relevant to claim No. |
| A | JP 2008-48413 A  (NTT Docomo Inc.), 28 February, 2008 (28.02.08), Full text; all drawings & EP 1890397 A1 | 1-3 |
| A | JP 2004-120643 A  (Toshiba Corp.), 15 April, 2004 (15.04.04), Full text; all drawings (Family: none) | 1-3 |
| A | Shinichi Mori et al., 'Path Characteristics Measurement Systems with CPICH for W-CDMA', Proceedings of the 2000 communications society conference of IEICE, B-5-81, IEICE, 2000.09.07, p. 369, equation 1 to 3 | 2 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 September, 2009 (09.09.09) | 29 September, 2009 (29.09.09) |

| Name and mailing address of the ISA/ | Authorized officer |
|---|---|
| Japanese Patent Office | |
| Facsimile No. | Telephone No. |

Form PCT/ISA/210 (second sheet) (April 2007)